# EUROPEAN PATENT SPECIFICATION

(11) **EP 0 562 689 B1**
(45) Date of publication and mention of the grant of the patent: **12.06.1996**
(21) Application number: 93200831.1
(22) Date of filing: 22.03.1993
(51) Int. Cl.: B01D 3/20

(54) **Device for counter-currently contacting gas and liquid**
Vorrichtung zum Kontaktieren von Gas-Flüssigkeit im Gegenstrom
Dispositif à contact gaz-liquide à contre-courant

(30) Priority: 25.03.1992 EP 92200854
(43) Date of publication of application: 29.09.1993
(73) Proprietor: SHELL INTERNATIONALE RESEARCH MAATSCHAPPIJ B.V., NL-2596 HR Den Haag (NL)
(72) Inventor: Konijn, Gerrit, NL-1031 CM Amsterdam (NL)

(56) References cited:
- EP-A- 48 508
- EP-A- 0 124 920
- EP-A- 0 232 925
- EP-A- 0 331 247

## Description

The present invention relates to a device for counter-currently contacting gas and liquid comprising a vertical column having a gas inlet and a liquid outlet at its lower end and a gas outlet and a liquid inlet at its upper end, which column is provided with gas/liquid contacting means arranged in the column between the gas inlet and the liquid inlet.

Such a device is disclosed in European patent specification No. 169 611.

In the known device a liquid distributor is arranged above the gas/liquid contacting means. The liquid distributor comprises a horizontal tray which is provided with distribution tubes through which liquid can pass to below the tray and gas risers which communicate with the gas outlet of the column. The liquid inlet of the device debouches onto the horizontal tray.

It was found that during normal operation a large amount of liquid is entrained with gas rising through the gas risers.

It is an object of the present invention to provide a device for counter-currently contacting gas and liquid provided with means to reduce entrainment with at least a factor of 100 to an amount which is about 10 litres of liquid per 1 000 000 Nm³ of gas.

To this end the device for counter-currently contacting gas and liquid according to the present invention comprises a vertical column having a gas inlet and a liquid outlet at its lower end and a gas outlet and a liquid inlet at its upper end, which column is provided with gas/liquid contacting means arranged in the column between the gas inlet and the liquid inlet, and with a gas/liquid separator arranged above the gas/liquid contacting means, which separator comprises a horizontal collection tray provided with passages communicating with a separation device and with one or more vertical distribution tube(s) extending through the horizontal collection tray to the gas/liquid contacting means, wherein the separation device has a gas outlet communicating with the gas outlet of the column and a liquid outlet debouching onto the collection tray, and wherein the liquid inlet debouches onto the horizontal collection tray.

Reference is made to European patent application publication No. 48 508 disclosing a device for counter-currently contacting gas and liquid, wherein the gas/liquid contacting means arranged between the gas inlet and the liquid inlet consists of a plurality of horizontal trays provided with contact swirl tubes arranged in openings in the tray, the contact swirl tubes have side entrances to allow liquid collected on the tray to enter into the contact swirl tubes for contacting gas flowing upwardly through the contact swirl tubes. The contact swirl tubes have liquid outlets which communicate with a downcomer that debouches onto the underlying tray. In this known device the liquid inlet debouches onto the uppermost contacting tray and communicates with the side entrances of the contact swirl tubes of this tray. During normal operation liquid which is supplied into the column through the liquid inlet is contacted with the gas flowing through the contact swirl tubes of the uppermost tray, then it is separated from the gas stream and passed to the underlying tray.

In the device according to the present invention the gas/liquid separator is the uppermost tray of the column, which tray is not used for contacting but for separation only and in this way the very low amount of entrainment can be obtained. Moreover this tray is used for distributing liquid supplied through the liquid inlet and for returning liquid that is separated in the swirl tubes.

European patent applications publication No. 83 811 and publication No. 124 920 disclose gas/liquid separators comprising a tray provided with separation swirl tubes. In these publications it is observed that these trays can be used to replace the trays in the column as described in European patent application publication No. 48 508, however, the separation swirl tubes should then become contact swirl tubes which are provided with a mixing chamber and with separate inlets for gas and liquid.

Thus these publications thus disclose combining the functions of separation and contacting in the contact swirl tubes on one tray. A drawback of such a combination is that good contacting will adversely affect separating and the reverse. Moreover, efficient separation for each tray will require stringent measures which will cause an increased restriction to gas flow through the tray.

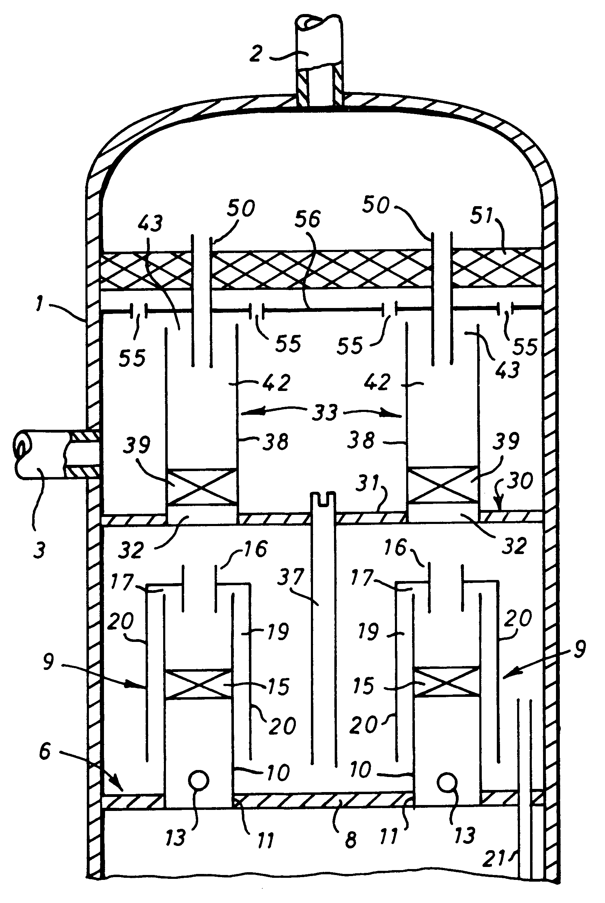

The invention will now be described by way of example in more detail with reference to the accompanying Figure showing an upper section of the device for counter-currently contacting gas and liquid according to the present invention.

The device comprising a normally vertical column 1 having a gas inlet (not shown) and a liquid outlet (not shown) at its lower end and a gas outlet 2 and a liquid inlet 3 at its upper end.

The column 1 is provided with gas/liquid contacting means arranged in the column 1 between the gas inlet in the lower end of the column 1 (not shown) and the liquid inlet 3. The gas/liquid contacting means comprises several contacting devices which are axially spaced apart in the column 1. In the Figure only the uppermost contacting device, designated with reference numeral 6, is shown.

The contacting device 6 comprises a horizontal tray 8 provided with two contact swirl tubes designated with reference numeral 9. Each contact swirl tube comprises an open-ended vertical tube 10 arranged in opening 11 in the horizontal tray 8. At its lower end the vertical tube 10 is provided with side entrances 13 (only one is shown) communicating with the space above the horizontal tray 8, and in the vertical tube 10 is arranged a swirl imparting means 15 in the form of a plurality of vanes which impart rotation to a fluid flowing upwards through the vertical tube 10. The contact swirl tubes 9 further comprises a gas outlet 16 and a liquid outlet 17 communicating with the upper end of the vertical tube 10. The liquid outlet 17 communicates with a annular channel 19 between the vertical tube 10 and an outer tube 20; the annular channel 19 debouches onto the horizontal tray 8. The contacting device 6 furthermore includes a downcomer 21 for conveying liquid collected on the tray 8 to the underlying contacting device (not shown).

The column 1 is further provided with a gas/liquid separator 30 arranged above the gas/liquid contacting means 6, which separator 30 comprises a horizontal collection tray 31 provided with passages 32 communicating with a separation device in the form of separation swirl tubes 33 and with a vertical distribution tube 37 extending through the horizontal collection tray 31 to the gas/liquid contacting means 6. Each separation swirl tube 33 consists of a vertical tube 38 communicating with the passage 32 provided with a swirl imparting means 39 in the form of a plurality of vanes arranged at its lower end. The separation device in the form of the separation swirl tubes 33 has a gas outlet in the form of gas outlets 42 communicating with the gas outlet 2 of the column 1 and a liquid outlet in the form of liquid outlets 43 debouching onto the collection tray 31. The liquid inlet 3 debouches onto the horizontal collection tray 31.

During normal operation, gas is supplied to the column 1 through the gas inlet (not shown) which is arranged below the gas/liquid contacting means 6. The gas is allowed to pass upwards through the column 1.

Liquid is supplied to the column 1 through the liquid inlet 3 and flows over the collection tray 31 until the liquid level on the collection tray 31 is such that liquid flows downwards through the distribution tube 37 onto the uppermost horizontal tray 8 of the gas/liquid contacting means. At the tray 8 ascending gas and descending liquid are brought in contact which each other in the contact swirl tubes 9. Liquid collected on the horizontal tray 8 enters into the contact swirl tubes 9 through side entrances 13 and gas enters the contact swirl tubes 9 from under horizontal tray 8. Liquid and gas are contacted in the mixing chamber of the vertical tubes 10 upstream of the swirl imparting means 15 which cause liquid and gas to separate. Gas flows through gas outlet 16 and liquid through liquid outlet 17 via annular channel 19 onto the vertical tray 8.

The ascending gas flows through passages 32 to the separation swirl tubes 33 of the gas/liquid separator 30 to remove from the gas entrained liquid. Gas free of entrained liquid leaves the gas outlet 2 of the column 1 and liquid flows through the liquid outlets 43 on the collecting tray 31. This liquid together with the liquid supplied through liquid inlet 3 flows through distribution tube 37 to the uppermost contacting device 6 of the contacting means.

Liquid flows downwardly through downcomer 21 to the contacting device underlying contacting device 6. Liquid from the lowermost contacting device (not shown) through the downcomer of that device leaves the column 1 through the liquid outlet (not shown).

An advantage of the device for counter-currently contacting gas and liquid according to the present invention is that on the uppermost tray, the gas/liquid separator, the separation function is separated from the contacting function. Only in this way the very small amount of liquid entrainment in treated gas can be obtained. A further advantage is that the collection tray pertaining to the gas/liquid separator is used as distribution tray for the incoming liquid.

The gas/liquid separator 30 can furthermore be provided with extended gas outlets 50 extending through a demistor mat, and with secondary gas outlets 55 in a tray 56 which is arranged under the demistor mat 51.

The contacting device 6 may comprise more than two contact swirl tubes 9, and the gas/liquid separator 30 can be provided with more than two separation swirl tubes 33 and with more than one vertical distribution tube 37. In addition to the liquid outlets 17 of the contact swirl tubes 9 and the liquid outlet 43 of the separation swirl tubes 33, the upper part of the wall of the vertical tubes 10 and 38 can be provided with axial slits.

The gas/liquid contacting means can consist of trays provided with contact swirl tubes as shown in the Figure, however, the gas/liquid contacting means may also consist of conventional contact trays, structured packing or random packing.

The device for counter-currently contacting gas and liquid according to the present invention is particularly suitable for drying natural gas by contacting the natural gas with glycol.

## Claims

1. Device for counter-currently contacting gas and liquid comprising a vertical column having a gas inlet and a liquid outlet at its lower end and a gas outlet (2) and a liquid inlet (3) at its upper end, which column is provided with gas/liquid contacting means arranged in the column between the gas inlet and the liquid inlet, and with a gas/liquid separator (30) arranged above the gas/liquid contacting means, which separator comprises a horizontal collection tray (31) provided with passages communicating with a separation device and with one or more vertical distribution tube(s) (37) extending through the horizontal collection tray to the gas/liquid contacting means, wherein the separation device has a gas outlet (42) communicating with the gas outlet of the column and a liquid outlet (43) debouching onto the collection tray, and wherein the liquid inlet (3) debouches onto the horizontal collection tray.

2. Device according to claim 1, wherein the horizontal collection tray is provided with separation swirl tubes (33), each separation swirl tube comprising an open-ended vertical tube (38) arranged in an opening of the collection tray so that its lower end communicates with the space below the collection tray, each swirl tube being provided with a gas outlet (42) communicating with the gas outlet of the column and a liquid outlet (43) debouching onto the collection tray.

## Patentansprüche

1. Vorrichtung zum Kontaktieren von Gas und Flüssigkeit im Gegenstrom, umfassend eine senkrechte Kolonne, die an ihrem Unterende einen Gaseingang und einen Flüssigkeitsausgang und an ihrem Oberende einen Gasausgang (2) und einen Flüssigkeitseingang (3) aufweist sowie mit einer in der Kolonne zwischen dem Gaseingang und dem Flüssigkeitseingang angeordneten Gas/Flüssigkeitskontaktiereinrichtung und mit einem über dieser angeordneten Gas/Flüssigkeitsseparator (30) ausgerüstet ist, der aus einem horizontalen, mit einer Trennvorrichtung in Verbindung stehende Durchgänge aufweisenden Auffangboden (31) und einer oder mehreren, durch den horizontalen Auffangboden hindurch zu der Gas/Flüssigkeitskontaktiereinrichtung hin verlaufenden senkrechten Verteilerröhre(n) (37) besteht, worin die Trennvorrichtung einen mit dem Gasausgang der Kolonne in Verbindung stehenden Gasausgang (42) und einen auf den Auffangboden mündenden Flüssigkeitsausgang (42) aufweist und worin der Flüssigkeitseingang (3) auf den horizontalen Auffangboden mündet.

2. Vorrichtung nach Anspruch 1, worin der horizontale Auffangboden mit Trennwirbelröhren (33) versehen ist, die jeweils aus einer senkrechten Röhre (38) mit offenen Enden bestehen, die in einer Öffnung im Auffangboden so angeordnet ist, daß ihr Unterende mit dem Raum unter dem Auffangboden in Verbindung steht, wobei jede Wirbelröhre einen mit dem Gasausgang der Kolonne in Verbindung stehenden Gasausgang (42) und einen auf den Auffangboden mündenden Flüssigkeitsausgang (43) aufweist.

## Revendications

1. Dispositif à contact gaz-liquide à contre-courant comprenant une colonne verticale ayant une admission de gaz et une sortie de liquide à son extrémité inférieure, et une sortie de gaz (2) et une admission de liquide (3) à son extrémité supérieure, laquelle colonne est pourvue d'un moyen à contact gaz-liquide, arrangé dans la colonne entre l'admission de gaz et l'admission de liquide, et d'un séparateur gaz-liquide (30), arrangé au-dessus du moyen à contact gaz-liquide, lequel séparateur comprend un plateau collecteur horizontal (31), pourvu de passages communiquant avec un dispositif de séparation et avec un ou plusieurs tube(s) de distribution verticale (37), se prolongeant à travers le plateau collecteur horizontal en direction du moyen à contact gaz-liquide, caractérisé en ce que le dispositif de séparation a une sortie de gaz (42) communiquant avec la sortie de gaz de la colonne et une sortie de liquide (43) débouchant sur le plateau collecteur, et caractérisé en ce que l'admission de liquide (3) débouche sur le plateau collecteur horizontal.

2. Dispositif selon la revendication 1, caractérisé en ce que le plateau collecteur horizontal est pourvu de tubes de séparation à tourbillonnement (33), chaque tube de séparation à tourbillonnement comprenant un tube vertical (38), ouvert aux deux extrémités, arrangé dans une ouverture du plateau collecteur de sorte que son extrémité inférieure communique avec l'espace endessous du plateau collecteur, chaque tube à tourbillonnement étant pourvu d'une sortie de gaz (42) communiquant avec la sortie de gaz de la colonne et une sortie de liquide (43) débouchant sur le plateau collecteur.
